(19) Europäisches Patentamt

European Patent Office

Office européen des brevets

(11) **EP 3 546 500 A1**

(12) **EUROPEAN PATENT APPLICATION**
published in accordance with Art. 153(4) EPC

(43) Date of publication:
02.10.2019 Bulletin 2019/40

(51) Int Cl.:
**C08J 3/12** *(2006.01)*

(21) Application number: 17873591.6

(22) Date of filing: 13.11.2017

(86) International application number:
**PCT/JP2017/040723**

(87) International publication number:
**WO 2018/096964 (31.05.2018 Gazette 2018/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 25.11.2016 JP 2016228593
06.07.2017 JP 2017132637

(71) Applicant: Toray Industries, Inc.
Tokyo 103-8666 (JP)

(72) Inventors:
• **ASAHARA, Chizuru**
Nagoya-shi
Aichi 455-8502 (JP)

• **ITO, Koya**
Nagoya-shi
Aichi 455-8502 (JP)
• **TAKAHASHI, Toshiya**
Nagoya-shi
Aichi 455-8502 (JP)
• **MAKITA, Kei**
Tokyo 103-8666 (JP)
• **MIYAMA, Hisashi**
Tokyo 103-8666 (JP)

(74) Representative: Mewburn Ellis LLP
City Tower
40 Basinghall Street
London EC2V 5DE (GB)

(54) **METHOD FOR PRODUCING POLYBUTYLENE TEREPHTHALATE RESIN PARTICLES, AND POLYBUTYLENE TEREPHTHALATE RESIN PARTICLES**

(57)     Provided is a method for producing polybutylene terephthalate resin particles, which includes (a) a step of heating a polybutyl terephthalate resin in an organic solvent to obtain a solution of a polybutylene terephthalate resin (dissolution step), and (b) a step of flash-cooling the solution to precipitate polybutylene terephthalate resin particles (precipitation step). The present invention provides a method for producing PBT resin particles by a simple operation that can be performed industrially. The present invention also provides extremely fine PBT resin particles of uniform particle size.

EP 3 546 500 A1

**Description**

[Technical Field]

The present invention relates to a method for producing polybutylene terephthalate resin particles and polybutylene terephthalate resin particles.

[Background Art]

A polybutylene terephthalate (hereinafter sometimes abbreviated as PBT) resin has excellent properties, such as mechanical property, heat resistance, solvent resistance, and dimensional stability, and has been increasingly demanded in the electrical and electronic field and the automotive field. A PBT resin is often supplied in the form of a pellet, but is also supplied as a powder for the additive application and the filler application. In response to the tendency of miniaturization and thinning of electrical and electronic parts, it is expected that the demand for PBT resin particles of a smaller particle diameter will be increased in the additive application and the filler application.

Commercial PBT resin particles are produced by a method for freeze-grinding a PBT resin using liquid nitrogen, and by dissolving a PBT resin in a solvent and then crushing PBT resin particles which was precipitated after cooling. The particle diameter of PBT resin particles produced by such a method is about 10 $\mu$m to 20 $\mu$m, and PBT resin particles having an average primary particle diameter of less than 1 $\mu$m has not been known.

Patent Literature 1 mentions a method for producing a crystalline polyester spherical particle powder, discloses a method for producing a particle powder by dissolving a crystalline polyester resin such as a PBT resin in a solvent and by cooling, and mentions that spherical particles having a diameter of 1 to 100 $\mu$m are obtained.

Patent Literature 2 mentions a method for producing cross-linked PBT particles, and mentions a step for cross-linking PBT pellets using gamma radiation, electron beam radiation, or heating in an oven and grinding the pellets to obtain PBT particles having a maximum dimension of 1,000 $\mu$m or less and a minimum dimension of 1 $\mu$m or more.

[Citation List]

[Patent Literature]

[Patent Literature 1]
JP 8-176310 A
[Patent Literature 2]
JP 2008-524418 W

[Summary of Invention]

[Technical Problem]

As mentioned above, since the average primary particle diameter of PBT resin particles obtained by conventional art is 1 $\mu$m or more, it is difficult to make a stable ink or coating liquid when an ink or coating liquid containing PBT resin particles is produced. To obtain a stable ink or coating liquid, it is necessary to obtain PBT resin particles of a smaller particle diameter. However, a method for simply and efficiently obtaining PBT resin particles having a so-called submicron size of less than 1 $\mu$m required for obtaining such ink or coating liquid has not been established yet. Therefore, development of a practical method for producing the PBT resin particles had been strongly desired.

An object of the present invention is to produce polybutylene terephthalate resin particles with less unevenness in particle diameter, having an average primary particle diameter of less than 1 $\mu$m by a simple operation that can be performed industrially.

[Solution to Problem]

The present inventors have intensively studied to solve the above problems and found that fine PBT resin particles can be obtained by flash-cooling a polybutylene terephthalate resin dissolved in an organic solvent, thus completing the present invention.

In other words, the present invention is a method for producing PBT resin particles, which includes the following step (a) and step (b):

(a) a step of heating a polybutylene terephthalate resin in an organic solvent to obtain a solution of the polybutylene terephthalate resin (dissolution step); and
(b) a step of flash-cooling the solution to precipitate polybutylene terephthalate resin particles (precipitation step).

Another embodiment of the present invention is polybutylene terephthalate resin particles having an average primary particle diameter of 30 nm or more and less than 1 $\mu$m and a coefficient of variation of 50% or less.

[Advantageous Effects of Invention]

When the present invention is used, it is possible to simply and stably produce polybutylene terephthalate resin particles with less unevenness in particle diameter, having an average primary particle diameter of less than 1 $\mu$m, which was conventionally difficult to obtain industrially, and to provide materials that are widely industrially useful.

[Brief Description of Drawings]

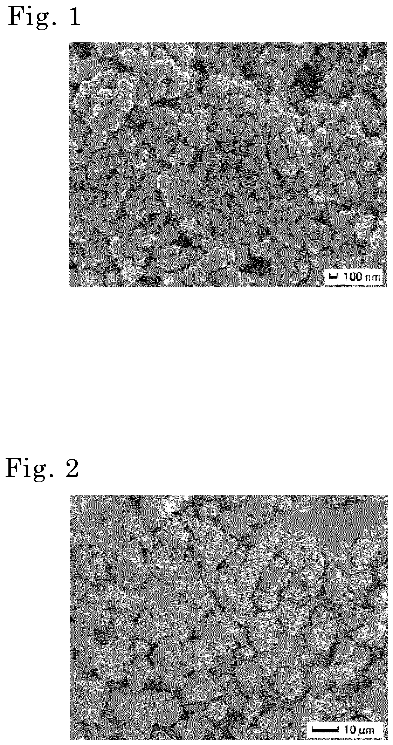

Fig. 1 is a scanning electron micrograph of polybutylene terephthalate resin particles produced in Example 1.
Fig. 2 is a scanning electron micrograph of polybutylene terephthalate resin particles produced in Comparative Example 1.

[Description of Embodiments]

The embodiments of the present invention will be described in more detail below.

[PBT Resin as Raw Material]

A PBT resin in the present invention is a thermoplastic polyester having an ester bond in the main chain obtained by polymerization reaction using terephthalic acid or an ester-forming derivative thereof as an acid component and 1,4-butanediol or an ester-forming derivative thereof as a diol component.
It is also possible to use an acid component other than terephthalic acid and/or a diol component other than 1,4-butanediol as a copolymerization component for the polybutylene terephthalate resin. In this case, examples of the acid component include aromatic dicarboxylic acid such as isophthalic acid, orthophthalic acid, naphthalenedicarboxylic acid, diphenyldicarboxylic acid, and sodiumsulfoisophthalic acid; alicyclic dicarboxylic acid such as cyclohexanedicarboxylic acid and decalindicarboxylic acid; and aliphatic dicarboxylic acid such as oxalic acid, malonic acid, succinic acid, sebacic acid, adipic acid, and dodecanedioic acid. Examples of the diol component include aliphatic diol such as ethylene glycol, diethylene glycol, triethylene glycol, polyethylene glycol, propylene glycol, neopentyl glycol, 1,6-hexanediol, polypropylene glycol, and polytetramethylene glycol; alicyclic diol such as 1,4-cyclohexanediol, and 1,4-cyclohexanedimethanol; and aromatic diol such as 2,2-bis(4'-hydroxyphenyl)propane.
Each of these copolymerization components is preferably 40% by mol or less based on terephthalic acid or 1,4-butanediol.
The PBT resin used in the present invention can be produced by a preexisting method (e.g., JP 2002-284870 A, JP 2010-83957 A, etc.). It is also possible to use a PBT resin produced by any one of methods including the DMT method, the direct polymerization method, the batch polymerization method, and the continuous polymerization method.
Specifically, for example, in the case of the direct polymerization method, a method in which a raw material mainly containing a diol component and a dicarboxylic acid component is made into a slurry, the slurry is supplied to a esterification reaction tank, esterification reaction is performed in the presence of a catalyst such as an organic titanium compound, and the oligomer, the esterification reaction product thus obtained, is subjected to polycondensation reaction through one or plural preliminary polycondensation reaction tank(s) and a final polymerization reaction tank is exemplified. The PBT resin thus obtained is drawn in a strand form through a die from the bottom of the final polymerization reaction tank, is water-cooled with cooling water, and then is cut with a pelletizer, thus obtaining granules such as pellets.
The intrinsic viscosity of the PBT resin is preferably in the range of 0.5 to 2.0, more preferably in the range of 0.5 to 1.5. If the intrinsic viscosity is too high, particles tend to be fused each other when particles are precipitated, and it is difficult to obtain particles having an average primary particle diameter of less than 1 $\mu$m. If the intrinsic viscosity is too low, the properties of the PBT resin are lowered.
Here, the intrinsic viscosity of the PBT resin can be calculated by the following method. First, solutions having PBT resin concentrations of 1.0 dl/g, 0.5 dl/g, and 0.25 dl/g using o-chlorophenol as a solvent are prepared. The solution viscosity of each of the solutions is measured at 25°C using an Ubbelohde type viscometer, and the value of the solution viscosity thus obtained is extrapolated to the concentration of 0, thus calculating the intrinsic viscosity.

As the PBT resin, a PBT resin produced by a known method can be used, and a commercial PBT resin can also be used. Examples of the commercial PBT resin include "TORAYCON" (registered trademark) (manufactured by Toray Industries, Inc.), "NOVADURAN" (Mitsubishi Engineering-Plastics Corporation), and "DURANEX" (registered trademark) (WinTech Polymer Ltd.).

[Production of PBT Resin Particles]

PBT resin particles in the present invention can be produced by subjecting the PBT resin to steps including the following steps (a) and (b) :

(a) a step of heating a PBT resin in an organic solvent to obtain a solution of the PBT resin (dissolution step); and
(b) a step of flash-cooling the solution to precipitate PBT resin particles (precipitation step).

[Dissolution Step]

In the present invention, a PBT resin is heated in an organic solvent and is dissolved to obtain a solution of the PBT resin in the dissolution step. The form of the PBT resin is not particularly limited, and specific examples thereof include powder, granule, and pellet. When PBT resin particles obtained by the present invention are used for an ink, a coating liquid, and the like, a PBT resin not containing inorganic ions is preferable in order to prevent corrosion of a device by coexisting inorganic ions.

As the organic solvent used in this step, any solvent can be used as long as a PBT resin is dissolved in the solvent. Specific examples thereof include at least one solvent selected from N-alkylamides such as N-methyl-2-pyrrolidinone (hereinafter sometimes abbreviated as NMP), N,N-dimethylacetamide (hereinafter sometimes abbreviated as DMAc), and N,N-dimethylformamide (hereinafter sometimes abbreviated as DMF); urea-based compounds such as 1,3-dimethyl-2-imidazolidinone (hereinafter sometimes abbreviated as DMI); and sulfur-based solvents such as dimethyl sulfoxide (hereinafter sometimes abbreviated as DMSO), dimethyl sulfone, and tetramethylene sulfone. Of these, at least one solvent selected from NMP, DMAc, and DMI is particularly preferable since the solubility of a PBT resin is high and they have been widely industrially used.

Even if an undissolved PBT resin exists in a solution, coarse grains or massive substances existing in a flash-cooled liquid (hereinafter sometimes abbreviated as micronized liquid) after flash-cooling can be easily removed by an operation such as filtration and centrifugation. Therefore, the charging concentration of a PBT resin based on the above organic solvent is not particularly limited. Usually, 0.1 to 10 parts by mass of a PBT resin is preferable, 0.3 to 8 parts by mass is more preferable, and 0.5 to 6 parts by mass is still more preferable based on 100 parts by mass of an organic solvent. When the charging concentration is within these ranges, application to industrial production is easy.

Regarding the atmosphere in a tank used for the dissolution step (hereinafter sometimes referred to as dissolution tank), it is preferable to keep the concentration of oxygen gas low, and under the inert gas atmosphere is more preferable in order to suppress the degradation and deterioration of a PBT resin and in terms of safety. Examples of the inert gas include nitrogen gas, carbon dioxide gas, helium gas, and argon gas. Considering economy and availability, a gas selected from nitrogen gas and argon gas is preferable.

A dissolution method is not particularly limited, and for example, a PBT resin and a solvent are put in a dissolution tank, and the PBT resin is dissolved while stirring. When not dissolved at normal temperature, the PBT resin is dissolved by heating. To produce PBT resin particles of uniform particle diameter, a method for completely dissolving a PBT resin, and then flash-cooling to precipitate is preferable, but an undissolved PBT resin may exist.

A dissolution temperature varies depending on the type of a solvent used and the concentration of a PBT resin, but usually it is preferably within the range of 50°C to 250°C, more preferably within the range of 100°C to 250°C, and still more preferably within the range of 100°C to 200°C. When the temperature exceeds 250°C, a PBT resin might be degraded. When the temperature is lower than 50°C, the amount of a solvent required for dissolving a PBT resin is increased.

A preferable dissolution time varies depending on the type of a solvent, the charging concentration of a PBT resin, a dissolution temperature, and the like, but usually it is preferably 10 minutes to 10 hours, more preferably 20 minutes to 8 hours, and still more preferably within the range of 30 minutes to 5 hours.

When dissolution is performed in a pressure-resistant container such as an autoclave, the presence or absence of an undissolved resin and the presence or absence of a resin in a molten state without being dissolved cannot be directly confirmed for structural reasons. However, when particles to be precipitated in the subsequent precipitation step have a reasonably different shape or particle diameter from that of a PBT resin before dissolution, the particles are considered as particles of a PBT resin obtained as a result of the dissolution step and the precipitation step of the present invention. This change in the shape or particle diameter of a PBT resin by the dissolution step and the precipitation step is judged from the change in the particle diameter measured using a particle diameter analyzer, and the change in the particle diameter and the change in the shape using SEM.

[Precipitation Step]

By flash-cooling the PBT resin solution obtained by the above dissolution step, PBT resin particles are precipitated from the solution, and a solution in which PBT resin particles are dispersed or suspended in a solvent is obtained. In the present invention, flash-cooling means a method for spouting (hereinafter also referred to as flashing) the above solution under pressure or under heating and pressure via a nozzle into another container (hereinafter sometimes referred to as receiver tank) having a temperature not higher than the temperature of an organic solvent in the dissolution step and having a pressure that is set to be lower than the pressure of the solution, rapidly cooling utilizing a cooling effect by pressure difference, a cooling effect by latent heat, and the like, and then precipitating PBT resin particles by the difference in solubility and an cooling effect.

Specifically, it is preferable to flash a PBT resin solution from a container kept under pressure or under heating and pressure into a receiver tank under atmospheric pressure (or under reduced pressure). During flash-cooling, it is preferable not to stir the dissolution tank.

For example, in the dissolution step, when dissolution is performed at a temperature not lower than the boiling point of a solvent in a pressure-resistant container such as an autoclave, the inside of the container is in a pressurized state. From that state, a PBT resin solution is spouted into a receiver tank under atmospheric pressure, thus enabling simple flash-cooling. In the dissolution step, when the pressure in a container does not reach a predetermined pressure, the pressure is increased by inert gas such as nitrogen until the pressure reaches a predetermined pressure, and then a PBT resin solution is spouted into a receiver tank under atmospheric pressure, thus enabling flash-cooling.

In flash-cooling, it is preferable to perform flash-cooling by putting a solvent in which a PBT resin to be precipitated (hereinafter referred to as precipitation solvent) into a receiver tank and then spouting a PBT resin solution in the precipitation solvent since PBT resin particles of a smaller particle diameter and of uniform particle diameter tend to be obtained. When a PBT resin solution is flashed into a precipitation solvent, the PBT resin solution may be flashed into the precipitation solvent via a gas phase or may be directly flashed into the precipitation solvent. Rapid cooling is desired to obtain finer PBT resin particles, and thus direct flashing into a precipitation solvent is more preferable. Examples of a method for directly flashing a PBT resin solution into a precipitation solvent includes a method for flashing by putting the outlet of a connecting tube from a dissolution tank into a precipitation solvent in a receiver tank.

When a PBT resin solution is flashed into a receiver tank, by heating the receiver tank, particles of a larger particle diameter are obtained compared with when the receiver tank is cooled. In this way, it is possible to control the particle diameter of PBT resin particles to be obtained by changing the temperature of a receiver tank.

The precipitation solvent is not particularly limited as long as it is a solvent in which PBT resin particles are precipitated when mixed with a PBT resin solution, and it is preferably a solvent which is uniformly mixed with an organic solvent to be used in the dissolution step. Here, uniformly mixing means that when two or more solvents are mixed, the solvents are uniformly mixed without appearance of an interface even after allowed to stand for 1 day. Examples thereof include a solvent in which NMP, DMAc, DMSO, and the like are uniformly mixed with water.

In terms of the fact that fine PBT resin particles are obtained and the particle diameter tends to be uniform, the precipitation solvent is preferably a solvent which is uniformly mixed with a solvent used in the dissolution step and which contains a poor solvent of a PBT resin. Specifically, when NMP is selected as the solvent in the dissolution step, alcohols, acetones, water, and the like can be used, and a precipitation solvent can be selected according to the objective. Particularly, it is preferable to use water in terms of the fact that fine PBT resin particles of uniform particle diameter tend to be obtained. As the precipitation solvent, a single solvent may be used, or two or more solvents may be mixed and used as long as the solvent (s) is/are uniformly mixed with an organic solvent to be used in the dissolution step. When NMP is selected as the solvent in the dissolution step, a mixed solvent of water and an organic solvent is preferable, and particularly a mixed solvent of water and NMP is preferable. In this case, the proportion of NMP added to water is preferably 0.01 part by mass or more and 10 parts by mass or less of NMP, more preferably 0.01 part by mass or more and 5 parts by mass or less of NMP based on 1 part by mass of water.

The amount of the precipitation solvent is not particularly limited. The range of 100 to 0.1 parts by mass based on 1 part by mass of the solvent in the dissolution step can be exemplified, and the range is more preferably 50 to 0.3 parts by mass, still more preferably 10 to 0.5 parts by mass.

In the precipitation step, a method for flash-cooling is not particularly limited, and a method for flashing a PBT resin solution under heating and pressure into a receiver tank with a lower pressure than that of the PBT resin solution at one tier, etc., can be used. Specifically, for example, a PBT resin is dissolved by heating in a pressure-resistant container such as an autoclave using NMP as the solvent in the dissolution step, thus obtaining a PBT resin solution pressurized. The PBT resin solution is flashed into a receiver tank under atmospheric pressure or under reduced pressure containing a precipitation solvent. The pressure (gauge pressure) of the PBT resin solution in the pressure-resistant container to be flashed is preferably 0.2 to 4 MPa, more preferably 0.2 to 3 MPa, and still more preferably 0.2 to 2 MPa.

When flashing into the precipitation solvent is performed, the solvent in the receiver tank may or may not be stirred. The precipitation solvent in the receiver tank may be cooled in advance by cooling the receiver tank with a refrigerant or ice water, or, on the contrary, may be heated. A preferable temperature of the precipitation solvent in the receiver tank varies depending on the precipitation solvent put in the receiver tank, and the range of not lower than a temperature at which the precipitation solvent is not coagulated to 15°C or lower is preferable. When the precipitation solvent is water, the temperature of the precipitation solvent in the receiver tank immediately before flash-cooling is preferably 0 to 40°C, more preferably 0 to 15°C in terms of the fact that particles having a smaller average primary particle diameter are obtained. When the receiver tank is heated, the upper temperature thereof is not more than the boiling point of the precipitation solvent. When the precipitation solvent is water, the temperature of the precipitation solvent in the receiver tank is preferably 50 to 100°C. When the precipitation solvent is a mixed solvent of water and NMP, although the boiling point varies depending on the mixing ratio thereof, the temperature of the precipitation solvent in the receiver tank is preferably 50 to 100°C. The particle diameter of the PBT resin to be obtained varies depending on the temperature of the precipitation solvent in the receiver tank. When the temperature of the precipitation solvent in the receiver tank is 0 to 40°C, PBT resin particles having an average primary particle diameter of 100 nm to 160 nm are obtained. When the temperature of the precipitation solvent is 50°C to 100°C, PBT resin particles having an average primary particle diameter of 160 nm to 400 nm are obtained.

The PBT resin particles thus obtained are obtained in the state of a dispersion or suspension (hereinafter, a dispersion or suspension in this state is sometimes referred to as micronized liquid). In this case, when coarse grains such as undissolved substances of the PBT resin charged are contained, it is possible to remove the coarse grains by filtration, etc.

[Isolation Step]

As a method for isolating PBT resin particles from the dispersion or suspension in the precipitation step, a conventionally known solid-liquid separation method such as filtration, centrifugation, and centrifugal filtration can be used. To efficiently separate fine PBT resin particles having an average primary particle diameter of less than 1 μm by a solid-liquid separation operation, it is desirable to increase the apparent particle diameter by aggregation and then to perform a solid-liquid separation operation such as filtration and centrifugation. As a method for increasing the apparent particle diameter by aggregation, an aggregation method by heating, an aggregation method using an aggregating agent such as salting-out, and the like can be used. Of these aggregation methods, a method using salting-out is preferable in terms of the fact that aggregates can be obtained in a short time. At this time, the average particle diameter of an aggregate is preferably 10 to 500 μm, more preferably 20 to 500 μm.

As the aggregation method using salting-out, for example, preferably 0.01 to 1000% by mass, more preferably 0.05 to 500% by mass of an inorganic salt such as sodium chloride or an organic salt such as magnesium acetate based on 1% by mass of PBT resin particles is added to the dispersion or suspension, thus obtaining aggregates of larger particle diameter. To the dispersion or suspension, the inorganic salt or organic salt may be directly added, or a solution containing 0.1 to 20% by mass of the inorganic salt or organic salt may be added. Examples of the inorganic salt include sodium chloride, magnesium chloride, calcium chloride, lithium chloride, and potassium chloride. Examples of the organic salt include sodium acetate, magnesium acetate, calcium acetate, sodium oxalate, magnesium oxalate, calcium oxalate, sodium citrate, magnesium citrate, and calcium citrate. The inorganic salt or organic salt may be used alone, or two or more inorganic salts or organic salts may be used in combination. As a solvent dissolving the inorganic salt or organic salt, water is preferable. When PBT resin particles obtained by the method of this embodiment are aggregated by such method, solid-liquid separation becomes easy.

Examples of the method for solid-liquid separation of aggregated PBT resin particles include a method such as filtration and centrifugation. In filtration and centrifugation, a membrane filter (filtration), a filter cloth (filtration, centrifugation), and the like can be used. The mesh size of a filter is appropriately determined according to the particle diameter of PBT resin particles, and a membrane filter having a mesh size of about 0.1 to 50 μm and a filter cloth with an air permeability at 124.5 Pa of 5 $cm^3/cm^2 \cdot$ sec or less can be preferably used.

[PBT Resin Particles]

The PBT resin particles thus obtained can be used for various applications as they are or as a dispersion after dispersed in a dispersion medium such as water and an organic solvent.

The PBT resin particles thus obtained are particles having an average primary particle diameter of less than 1 μm, preferably 500 nm or less, and more preferably 300 nm or less. The lower limit of the average primary particle diameter is 30 nm. According to the method of the present invention, PBT resin particles of uniform particle size are obtained. In the PBT resin particles of the present invention, the coefficient of variation of the particle diameter is 60% or less, preferably 50% or less, more preferably 40% or less, and still more preferably 30% or less. Although the coefficient of variation is preferably smaller, the coefficient of variation is often 10% or more since it is difficult to obtain PBT resin particles having a coefficient of variation of less than 10% even according to the present invention.

The average primary particle diameter of PBT resin particles as used herein is determined by measuring the maximum length of 100 particles randomly selected from images obtained using a scanning electron microscope and by calculating the arithmetic average.

The coefficient of variation (CV) representing the uniformity of the particle diameter of PBT resin particles in this embodiment was calculated by the following formula (1) to formula (3) from the data measured when the average primary particle diameter was calculated.

[Mathematical Formula 1]

(Variance) Formula (1):

$$\sigma^2 = \frac{1}{N} \sum_{i=1}^{N} (X_i - \bar{X})^2$$

$X_i$: particle diameter, $\bar{X}$: average particle diameter, N: number of measured data

(Standard deviation) Formula (2): $\sigma = \sqrt{(\sigma^2)}$

(Coefficient of variation) Formula (3): $CV = \sigma / \bar{X}$

The PBT resin particles may be solid or hollow, but they are preferably solid in terms of industrial application. The fact that the PBT resin particles in this embodiment are solid can be confirmed by observation of the cross section of the particles using a transmission electron microscope.

The PBT resin particles of the present invention are characterized by the fact that the average primary particle diameter is submicron size and the particle size distribution is narrow.

Use of such PBT resin particles enables to make a stable ink or coating liquid when an ink or coating liquid containing PBT resin particles is produced. Particularly, minute coating becomes enabled in the field of electrical and electronic parts, and thus a uniform and thin layer can be formed, leading to industrial usefulness. In addition, a filler or additive of a smaller particle diameter becomes able to be supplied also for the other applications.

[Examples]

[Measurement of Average Primary Particle Diameter]

PBT resin particles were observed using a scanning electron microscope, JEOL JMS-6700F, manufactured by JEOL Ltd., and 100 particles randomly selected from the obtained images (magnification, ×30,000) were selected. Then, the particle diameter was measured using the maximum length as the particle diameter, and the average was regarded as the average primary particle diameter.

[Calculation of Coefficient of Variation of PBT Resin Particles]

PBT resin particles were observed using a scanning electron microscope, JEOL JMS-6700F, manufactured by JEOL Ltd., optional 100 particles were selected from the obtained images (magnification, ×30, 000), and the maximum length was measured as the particle diameter. Using the values of the 100 particle diameters thus obtained, the coefficient of variation (CV) was calculated by the aforementioned formula (1) to formula (3).

Example 1

[Dissolution Step]

A 1,000 ml autoclave was used as a dissolution tank, and a stirrer, a thermoscope, and a solution extraction tube were attached to the autoclave. A connecting tube whose valve can be opened and closed was attached to the extraction tube. A 1,000 ml autoclave was used as a receiver tank for flash-cooling, and a stirrer, a capacitor, a gas vent tube, and the other end of the connecting tube from the dissolution tank were attached to the autoclave.

In the dissolution tank, 3 g of a PBT resin (manufactured by Toray Industries, Inc., intrinsic viscosity of 0.85) and 297 g of NMP (manufactured by Kanto Chemical Co., Inc.) were charged, nitrogen substitution was performed, and sealed. The internal temperature of the dissolution tank was raised to 160°C while stirring, and stirring was performed for 1 hour. The pressure was increased using nitrogen, and the internal pressure (gauge pressure) of the dissolution tank was increased to 0.5 MPa.

[Precipitation Step]

In the receiver tank, 300 g of water as a precipitation solvent was put, and the receiver tank was cooled with ice water to 5°C. While stirring, a trace amount of nitrogen gas was vented under atmospheric pressure to make nitrogen atmosphere. The valve of the connecting tube of the dissolution tank was opened, and the solution was directly flashed into water in the receiver tank. To the suspension of the PBT resin particles thus obtained, 3 g of a 10% by mass sodium chloride solution was added to aggregate. The PBT resin particles thus aggregated were filtered using a membrane filter and washed with water to obtain a hydrous cake of PBT resin particles. Part of the cake was dried, and was observed using a scanning electron microscope (SEM). As a result, the average primary particle diameter was 130 nm, and the coefficient of variation was 20%.

Example 2

The procedure was performed in the same manner as in Example 1, except that 6g of a PBT resin (manufactured by Toray Industries, Inc., intrinsic viscosity of 0.85) and 294g of NMP (manufactured by Kanto Chemical Co., Inc.) were charged in the dissolution tank. The average primary particle diameter of the PBT resin particles was 131 nm, and the coefficient of variation was 18%.

Example 3

The procedure was performed in the same manner as in Example 1, except that 9 g of a PBT resin (manufactured by Toray Industries, Inc., intrinsic viscosity of 0.85) and 291 g of NMP (manufactured by Kanto Chemical Co., Inc.) were charged in the dissolution tank. The average primary particle diameter of the PBT resin particles was 130 nm, and the coefficient of variation was 25%.

Example 4

The procedure was performed in the same manner as in Example 1, except that 9 g of a PBT resin (manufactured by Toray Industries, Inc., intrinsic viscosity of 0.85) and 291 g of NMP (manufactured by Kanto Chemical Co., Inc.) were charged in the dissolution tank and the amount of water in the receiver tank was 150 g. The average primary particle diameter of the PBT resin particles was 137 nm, and the coefficient of variation was 21%.

Example 5

The procedure was performed in the same manner as in Example 3, except that the temperature of the receiver tank was 60°C. The average primary particle diameter of the PBT resin particles was 181 nm, and the coefficient of variation was 24%.

Example 6

The procedure was performed in the same manner as in Example 5, except that 10 g of a PBT resin (manufactured by Toray Industries, Inc., intrinsic viscosity of 0.85) and 290 g of NMP (manufactured by Kanto Chemical Co., Inc.) were charged in the dissolution tank. The average primary particle diameter of the PBT resin particles was 190 nm, and the coefficient of variation was 19%.

Example 7

The procedure was performed in the same manner as in Example 3, except that the temperature of the receiver tank was 95°C. The average primary particle diameter of the PBT resin particles was 173 nm, and the coefficient of variation was 23%.

Example 8

The procedure was performed in the same manner as in Example 6, except that the temperature of the receiver tank was 95°C. The average primary particle diameter of the PBT resin particles was 242 nm, and the coefficient of variation was 20%.

Example 9

The procedure was performed in the same manner as in Example 3, except that the precipitation solvent in the receiver tank was a mixed solvent of 240 g of water and 60 g of NMP (manufactured by Kanto Chemical Co., Inc.) and the temperature of the receiver tank was 25°C. The average primary particle diameter of the PBT resin particles was 140 nm, and the coefficient of variation was 20%.

Example 10

The procedure was performed in the same manner as in Example 3, except that the precipitation solvent in the receiver tank was a mixed solvent of 200 g of water and 100 g of NMP (manufactured by Kanto Chemical Co., Inc.) and the temperature of the receiver tank was 25°C. The average primary particle diameter of the PBT resin particles was 152 nm, and the coefficient of variation was 21%.

Example 11

The procedure was performed in the same manner as in Example 3, except that the precipitation solvent in the receiver tank was a mixed solvent of 100 g of water and 200 g of NMP (manufactured by Kanto Chemical Co., Inc.) and the temperature of the receiver tank was 25°C. The average primary particle diameter of the PBT resin particles was 158 nm, and the coefficient of variation was 25%.

Example 12

The procedure was performed in the same manner as in Example 8, except that the precipitation solvent in the receiver tank was a mixed solvent of 200 g of water and 100 g of NMP (manufactured by Kanto Chemical Co., Inc.). The average primary particle diameter of the PBT resin particles was 212 nm, and the coefficient of variation was 20%.

Example 13

The procedure was performed in the same manner as in Example 12, except that 11 g of a PBT resin (manufactured by Toray Industries, Inc., intrinsic viscosity of 0.85) and 289 g of NMP (manufactured by Kanto Chemical Co., Inc.) were charged in the dissolution tank. The average primary particle diameter of the PBT resin particles was 222 nm, and the coefficient of variation was 20%.

Example 14

The procedure was performed in the same manner as in Example 3, except that the organic solvent in the dissolution tank was DMAc in place of NMP and the temperature of the receiver tank was 25°C. The average primary particle diameter was 131 nm, and the coefficient of variation was 22%.

Comparative Example 1

A PBT resin solution was prepared by dissolving 9 g of a PBT resin (manufactured by Toray Industries, Inc., intrinsic viscosity of 0.85) in 291 g of NMP (manufactured by Mitsubishi Chemical Corporation) at 160°C. The solution at 160°C was cooled to 100°C, and then was added to 300 g of water at 25°C under atmospheric pressure. The suspension of the PBT resin particles thus obtained was filtered with a filter paper and washed with water to obtain a hydrous cake of the PBT resin particles. Part of the cake was dried and observed using a scanning electron microscope (SEM), and as a result, the average primary particle diameter was 13.6 $\mu$m.

[Table 1]

| | Dissolution tank | | | Receiver tank | | Temperature of dissolution tank | Micronization temperature (Temperature of receiver tank) | Solution/ poor solvent ratio | Average primary particle diameter | Coefficient of variation |
|---|---|---|---|---|---|---|---|---|---|---|
| | PBT | Organic solvent | | Water | NMP | | | | | |
| | (g) | Type | (g) | (g) | (g) | (°C) | (°C) | | (nm) | (%) |
| Example 1 | 3 | NMP | 297 | 300 | 0 | 160 | 5°C | 1/1 | 130 | 20 |
| Example 2 | 6 | NMP | 294 | 300 | 0 | 160 | 5°C | 1/1 | 131 | 18 |
| Example 3 | 9 | NMP | 291 | 300 | 0 | 160 | 5°C | 1/1 | 130 | 25 |
| Example 4 | 9 | NMP | 291 | 150 | 0 | 160 | 5°C | 2/1 | 137 | 21 |
| Example 5 | 9 | NMP | 291 | 300 | 0 | 160 | 60°C | 1/1 | 181 | 24 |
| Example 6 | 10 | NMP | 290 | 300 | 0 | 160 | 60°C | 1/1 | 190 | 19 |
| Example 7 | 9 | NMP | 291 | 300 | 0 | 160 | 95°C | 1/1 | 173 | 23 |
| Example 8 | 10 | NMP | 290 | 300 | 0 | 160 | 95°C | 1/1 | 242 | 20 |
| Example 9 | 9 | NMP | 291 | 240 | 60 | 160 | 25°C | 1/1 | 140 | 20 |
| Example 10 | 9 | NMP | 291 | 200 | 100 | 160 | 25°C | 1/1 | 152 | 21 |
| Example 11 | 9 | NMP | 291 | 100 | 200 | 160 | 25°C | 1/1 | 158 | 25 |
| Example 12 | 10 | NMP | 290 | 200 | 100 | 160 | 95°C | 1/1 | 212 | 20 |
| Example 13 | 11 | NMP | 289 | 200 | 100 | 160 | 95°C | 1/1 | 222 | 20 |
| Example 14 | 9 | DMAc | 291 | 300 | 0 | 160 | 25°C | 1/1 | 131 | 22 |
| Comparative Example 1[1] | 9 | NMP | 291 | 300 | 0 | 160→100 | 25°C | 1/1 | 13.6 μm | - |

1) Crystallization under atmospheric pressure without increasing the pressure of the dissolution tank.

[Industrial Applicability]

According to the production method of the present invention, it is possible to very easily obtain PBT resin particles having a narrow particle size distribution and having a fine particle diameter. The dispersion of the PBT resin particles thus obtained can be widely used for applications such as adhesives, paints, dispersants in ink for printing, magnetic recording media, modifiers for plastics, and materials for interlayer dielectrics.

**Claims**

1. A method for producing polybutylene terephthalate resin particles, which comprises the following dissolution step (a) and precipitation step (b) :

    (a) a step of heating a polybutyl terephthalate resin in an organic solvent to obtain a solution of a polybutylene terephthalate resin (dissolution step); and
    (b) a step of flash-cooling the solution to precipitate polybutylene terephthalate resin particles (precipitation step) .

2. The method for producing polybutylene terephthalate resin particles according to claim 1, wherein the solution is spouted into a solvent in which the polybutylene terephthalate resin particles are precipitated in the precipitation step.

3. The method for producing polybutylene terephthalate resin particles according to claim 1 or 2, wherein a pressure of the solution to be spouted is 0.2 to 4 MPa in the precipitation step.

4. The method for producing polybutylene terephthalate resin particles according to any one of claims 1 to 3, wherein heating is performed in a temperature range of 100°C to 250°C in the dissolution step.

5. The method for producing polybutylene terephthalate resin particles according to any one of claims 1 to 4, wherein the organic solvent is at least one solvent selected from N-methyl-2-pyrrolidinone, dimethylacetamide, and 1,3-dimethyl-2-imidazolidone.

6. The method for producing polybutylene terephthalate resin particles according to any one of claims 2 to 5, wherein the solvent in which the polybutylene terephthalate resin particles are precipitated is water or a mixed solvent of water and an organic solvent in the precipitation step.

7. The method for producing polybutylene terephthalate resin particles according to any one of claims 2 to 6, wherein a temperature of the solvent in which the polybutylene terephthalate resin particles are precipitated is 0°C to 40°C in the precipitation step.

8. The method for producing polybutylene terephthalate resin particles according to any one of claims 2 to 6, wherein a temperature of the solvent in which the polybutylene terephthalate resin particles are precipitated is 50°C to 100°C in the precipitation step.

9. The method for producing polybutylene terephthalate resin particles according to any one of claims 1 to 6, wherein an average primary particle diameter of the obtained polybutylene terephthalate resin particles is 30 nm or more and less than 1 $\mu$m and a coefficient of variation of a particle diameter is 60% or less.

10. Polybutylene terephthalate resin particles having an average primary particle diameter of 30 nm or more and less than 1 $\mu$m and having a coefficient of variation of a particle diameter of 60% or less.

Fig. 1

Fig. 2

### INTERNATIONAL SEARCH REPORT

| International application No. |
| --- |
| PCT/JP2017/040723 |

**A. CLASSIFICATION OF SUBJECT MATTER**
Int. Cl.   C08J3/12(2006.01)i

According to International Patent Classification (IPC) or to both national classification and IPC

**B.   FIELDS SEARCHED**

Minimum documentation searched (classification system followed by classification symbols)
Int. Cl.   C08J3/00-3/16, C08G63/00-63/91

Documentation searched other than minimum documentation to the extent that such documents are included in the fields searched
Published examined utility model applications of Japan    1922-1996
Published unexamined utility model applications of Japan   1971-2018
Registered utility model specifications of Japan          1996-2018
Published registered utility model applications of Japan   1994-2018

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | JP 57-172923 A (TORAY INDUSTRIES, INC.) 25 October 1982, page 3, lower right column 6 to line 19, table 1 (Family: none) | 1-10 |
| A | CN 101348572 B (SHANGHAI GENIUS ADVANCED MATERIAL CO., LTD.) 08 December 2010, paragraphs [0029]-[0030], fig. 6 (Family: none) | 1-10 |
| A | JP 2010-106232 A (TORAY INDUSTRIES, INC.) 13 May 2010, entire document & US 2011/0020647 A1, entire document & WO 2009/119466 A1 & EP 2258750 A1 & KR 10-2010-0125359 A & CN 101981091 A & TW 200946569 A | 1-10 |

☒   Further documents are listed in the continuation of Box C.          ☐   See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
|  |  |

| Name and mailing address of the ISA/ Japan Patent Office 3-4-3, Kasumigaseki, Chiyoda-ku, Tokyo 100-8915, Japan | Authorized officer |
| --- | --- |
|  | Telephone No. |

Form PCT/ISA/210 (second sheet) (January 2015)

**INTERNATIONAL SEARCH REPORT**

International application No.

PCT/JP2017/040723

C (Continuation).    DOCUMENTS CONSIDERED TO BE RELEVANT

| Category* | Citation of document, with indication, where appropriate, of the relevant passages | Relevant to claim No. |
|---|---|---|
| A | JP 63-248875 A (MURAYAMA, Shigeru) 17 October 1988, entire document (Family: none) | 1-10 |
| A | JP 10-176065 A (DAINIPPON INK AND CHEMICALS, INC.) 30 June 1998, entire document (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8176310 A
- JP 2008524418 W
- JP 2002284870 A
- JP 2010083957 A